# EUROPEAN PATENT APPLICATION

(11) **EP 2 360 383 A1**
(43) Date of publication of application: **24.08.2011**
(21) Application number: 10154469.0
(22) Date of filing: 24.02.2010
(51) Int. Cl.: F16C 33/60, F16C 25/06, F16C 19/38

(54) **Bearing system for a wind turbine rotor**

(71) Applicant: Siemens Aktiengesellschaft, 80333 München (DE)
(72) Inventor: Ventzke, Klaus, 52379 langerwehe (DE)

(57) **Abstract**

A Bearing system for a wind turbine rotor comprises a double row tapered roller bearing (5) in O-arrangement, wherein the double row tapered roller bearing (5) comprises an inner ring (7), a circumferential row of tapered rollers (9) supported on the inner ring (7), and a floating inner rib (14), a driving device (26) as well as an removable interlocking device (17 - 24), wherein the floating inner rib (14) can be axially moved by the driving device (26) to a predetermined position so as to abut on each large roller end (11) facing axially outwards in order to apply a corresponding preload on each tapered roller (9), and rigidly coupled to the inner ring (7) by means of the interlocking device (17 - 24).

## Description

The invention is in the field of roller bearing technology and relates to a bearing system for a wind turbine rotor.

In wind turbine applications, big main shaft bearings with a high operating clearance have a reduced rating lifetime compared to bearings without clearance or bearings which have an optimized minimum preload. In particular, non-preloaded double row bearings in O― or X-arrangement have a low stiffness. When these bearings are loaded by high radial forces or high tilting moments, the load distribution of the rolling elements becomes irregular. As a consequence, some rolling elements experience high Hertzian pressure causing premature bearing failure. In particular, the bearing stiffness depends on the preload and the load arising from a current operating condition of said bearing. The stiffness of a too high preloaded double row bearing and therefore the friction in the bearing is also high. As a result of this, the inner load in the bearing is disadvantageously high which causes premature bearing failure.

Furthermore, roller bearings appear to be particularly susceptible to skidding, which is the result of a combination of a rolling and a sliding motion that compromises the rolling integrity of the bearing. When skidding occurs a forward force acting on the rotating ring is smaller than the resistance to rolling of the roller/cage set. Skidding may cause smearig and streaks in circumferential direction of the rolling elements and raceways. This can result in a premature bearing failure due to excessive pitting formation. Further, skidding occurs as soon as the non-preloaded rolling elements have no contact to the raceway and will also be decelerated by the cage.

The damping capacity of rigid bearing arrangements is inadequate in dynamic load cases. Rigid preloaded bearings have not such an appropriate damping capacity compared to hydraulic preloaded systems, and the rigid systems could not actuate the damping capacity. On the one hand, the true running of bearing surrounding parts will be affected by the bearing clearance. On the other hand, the non-preloaded bearing is not stiff enough and the maximum true running failure will have an unacceptable high value. Additionally, the preload and the clearance in a big wind turbine bearing depend on bearing manufacturing precision, on fits of the shaft and housing as well as on current operating temperatures. The variable range of the installed clearance causes a different current operating condition, which implicates a different range of contact pressure in a non-adjustable preload system. Too high bearing clearance will cause an unacceptable high edge pressure of the rollers in non-preloaded systems.

It is an object of the invention to provide a bearing system for a wind turbine rotor, wherein the bearing system has a long lifetime although the bearing system is appropriate for a wide range of operating loads.

The inventive bearing system for a wind turbine rotor comprises a double row tapered roller bearing in O-arrangement, wherein the double row tapered roller bearing comprises an inner ring, a circumferential row of tapered rollers supported on the inner ring, and a floating inner rib, a driving device as well as an removable interlocking device, wherein the floating inner rib can be axially moved by the driving device to a predetermined position so as to abut on each large roller end facing axially outwards in order to apply a corresponding preload on each tapered roller, and rigidly coupled to the inner ring by means of the interlocking device.

Therefore, the inventive bearing system is provided with an advantageously sufficient variable external load for adjustably preloading the rollers, so that optimised operating conditions can be provided for the tapered rollers over a wide range of operating conditions of the bearing system. Further, the bearing system is advantageously very stiff, so that the true running characteristics of the surrounding parts of the bearing system are not affected by the bearing clearance. It is an advantage that, once the optimum clearance, preload and stiffness of the inventive bearing system are achieved by rigidly coupling the floating inner rib to the inner ring in the predetermined axial position by means of the interlocking device, the optimal configuration of the bearing system is rigidly installed. Furthermore, a positive effect is that the load distribution on the rollers and on the floating inner rib is well-balanced. The Hertzian pressure of the highest loaded roller is reduced compared to a common bearing, since the load is distributed to adjacent rollers. As a consequence of this, the fatigue lifetime and the availability of the rollers are increased and therefore the lifetime of the inventive bearing system is high. Additionally, according to the invention, skidding of the rollers can be avoided, so that the lifetime of the bearing system is not affected by smearing.

By means of the driving device the preload and the stiffness of the inventive bearing system can be adapted according to a current operating condition. It is preferred to monitor the operating condition of the inventive bearing system during the operation, preferably the temperature, noise, oscillation and/or radial runout. Once a critical operating condition is monitored, the preload and the stiffness of the bearing system can be adapted by actuating the driving device in order to carry optimised the inner load of the bearing system.

It is preferred that the interlocking device forms a form-fit between the inner ring and the floating inner rib. Further, the interlocking device preferably comprises a circumferential support rip which is formed on the inner ring, extends in radial direction therefrom, and engages the floating inner rib so as to form the form-fit between the inner ring and the floating inner rib. Due to the provision of the form-fit between the inner ring and the floating inner rib the stiffness of this structure is high in axial direction. Therefore, the whole structure of the bearing system is advantageously stiff. It is preferred that the support rib is integrally formed on the inner ring.

The circumferential support rib preferably comprises a circumferential axial support step arranged perpendicular to the bearing axis and facing the bearing, wherein the floating inner rib is axially supported by the support step. Further, it is preferred that the inner ring comprises a sliding face radially supporting the floating inner rib on the inner ring and axially guiding the floating inner rib for the axial movement. Preferably, the sliding face is adapted to circumferentially guide the floating inner rib, so that the floating inner rib is circumferential movable on the inner ring. The axial support step preferably has a first saw tooth treaded face and the floating inner rib preferably has a second saw tooth treaded face, wherein the first saw tooth treaded face and the second saw tooth treaded face are engaging one another and cooperating together, so that subject to the circumferential position of the floating inner rib relative to the inner ring the axial position of the floating inner rib relative to the inner ring is defined. Further, the first saw tooth treaded face and the second saw tooth treaded face are preferably formed in such a manner that in axial direction the floating inner rib is self-locked supported by the inner ring. Therefore, the first saw tooth treaded face and the second saw tooth treaded face transform the circumferential movement of the inner floating rib to the axial movement of the floating inner rib. Further, since the first saw tooth treaded face and the second saw tooth treaded face are self-locking in the axial direction, the axial position of the floating inner rib is rigidly fixed. Hence, the axial adjustment of the floating inner ring can be easily handled by turning the floating inner rib, wherein the reached axial position of the floating inner ring and therefore the preload and clearance of the bearing system is well-defined.

Furthermore, the inner ring and/or the floating inner rib are adapted to temporarily pressurize the space between the first saw tooth treaded face and the second saw tooth treaded face with hydraulic fluid in order to overcome the self-locking effect. Moreover, the driving device is adapted to circumferentially drive the floating inner rib and thereby axially moving the floating inner rib by the cooperation of the first saw tooth treaded face and the second saw tooth treaded face. It is preferred that the driving device is a hydraulic plunger circumferentially attacking the floating inner rib and the inner ring in order to circumferentially drive the floating inner rib.

In the following the invention is explained on the basis of a preferred embodiment with reference to the drawings. In the drawings:
Fig. 1 shows a sectional view of the embodiment of an inventive bearing system,
Fig. 2 shows a lateral view of the embodiment the inventive bearing system, and
Fig 3. shows sectional view A-A in Fig. 1.

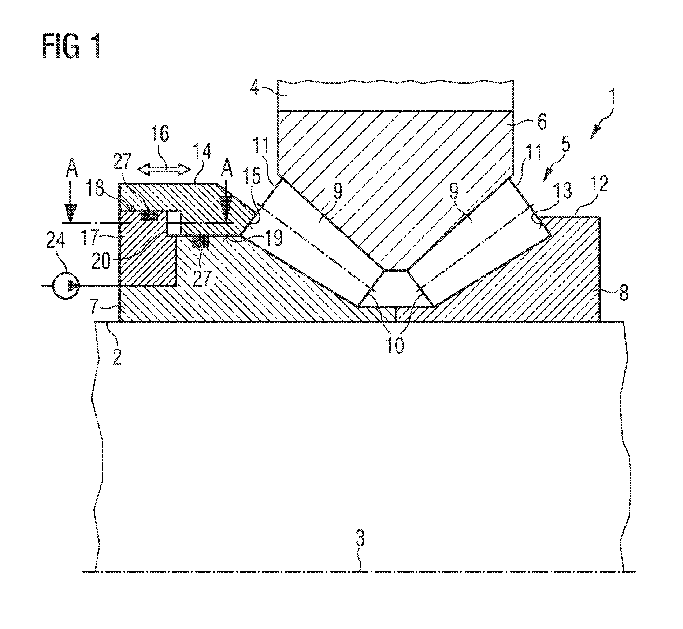

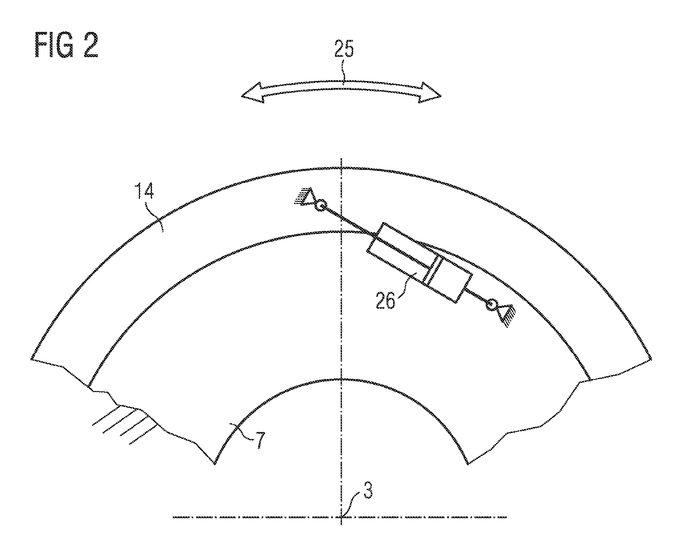

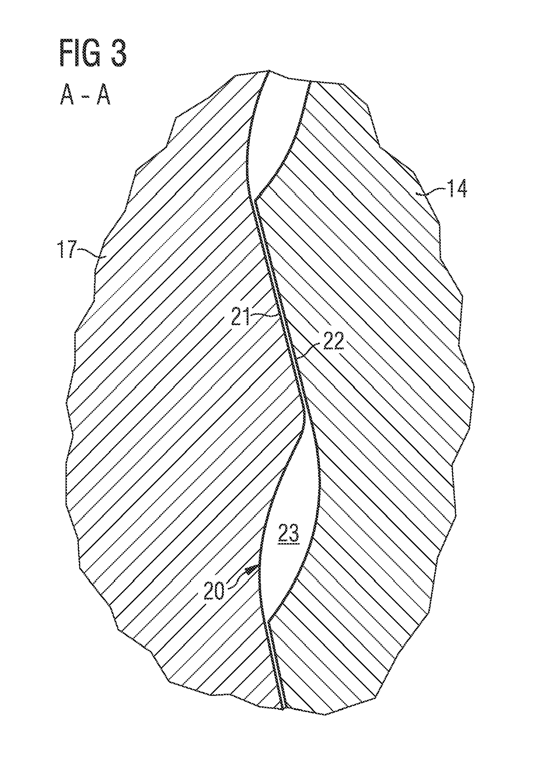

As demonstrated in Fig. 1 to 3, a wind turbine rotor comprises a bearing system 1, a wind turbine shaft 2 having a shaft axis 3, and a rotor hub 4, wherein the shaft 2 is fixed and the rotor hub 3 is rotating. A rotor blade or a plurality of rotor blades (not shown) are mounted on the rotor hub 4 and extend in radial direction. The rotor hub 4 is supported through the rotor shaft 2 by the bearing system 1, so that the rotor hub 4 is pivot mounted on the wind turbine shaft 2. The bearing system 1 is subject to radial forces, axial forces, and tilting moments caused by wind loads, the weight of the blades and the rotor hub 4, and unbalances of the wind turbine rotor, etc. In order to provide a stable construction of the wind turbine rotor being able to sustain the operating loads, the bearing system 1 comprises a double row tapered roller bearing 5 in O-arrangement. The double row tapered roller bearing 5 comprises a divided shaft ring comprised by a first inner ring 7 and a second inner ring 8. On the first inner ring 7 a circumferential row of tapered rollers 9 is arranged and supported by the first inner ring 7. Further, on the second inner ring 8 another circumferential row of tapered rollers 9 is arranged and supported by the second inner ring 8 thereby forming together with the first inner ring 7 and its tapered rollers 9 the O-arrangement.

The tapered rollers 9 are cone shaped and have therefore a small roller end 10 and a large roller end 11. The tapered rollers 9 are arranged on their respective inner ring 7, 8 such that its large roller ends 11 face axially outwards. The second inner ring 8 comprises an fixed inner rib 12 integrally formed thereon. The fixed inner rib 12 extends in radial direction outwards and is arranges at the axial outer end of the second inner ring 8 so that the fixed inner rib 12 abuts at each large roller end 11 of the tapered rollers 9 supported by the second inner ring 8. The circumferential surface of the fixed inner rib 12 facing the large roller ends 11 forms a fixed raceway 13 in order to preload the tapered rollers 9 supported by the second inner ring 8.

The inner ring 7 comprises a circumferential support rip 17 which is integrally formed on the inner ring 7, and extends in radial direction therefrom. The circumferential support rib 17 forms a circumferential axial support step 20 arranged perpendicular to the bearing axis 3 and facing the bearing 5, wherein the radial outlying surface of the circumferential support rib 17 defines an upper sliding face 18, and the radial outlying surface of the inner ring 7 defines a lower sliding face 19. The axial support step 20 bridges the upper sliding face 18 and the lower sliding face 19.

The bearing system 1 further comprises a floating inner rib 14 arranged on the support rib 17 and the first inner ring 7. The floating inner rib 14 is formed as a ring and has an inlying surface which matches to the circumferential support rib 17, upper sliding face 18, the support step 20, and the lower sliding face 19. The circumferential support rib 17 engages the floating inner rib 14, wherein the floating inner rib 14 is axially supported by the support step 20 so as to form a form-fit between the inner ring 7 and the floating inner rib 14. Further, the floating inner rib 14 is supported by the upper sliding face 18 and the lower sliding face 19 such that the floating inner rib 14 is guided in axial movement 16 and circumferential movement 25.

The axial support step 20 comprises a first saw tooth treaded face 21 and the floating inner rib 14 comprises a second saw tooth treaded face 22, wherein the first saw tooth treaded face 21 and the second saw tooth treaded face 22 engage one another. Therefore, the first saw tooth treaded face 21 and the second saw tooth treaded face 22 cooperate together, so that subject to the circumferential position of the floating inner rib 14 relative to the inner ring 7 the axial position of the floating inner rib 14 relative to the inner ring 7 is defined. Further, a respective pitch of the first treaded face 21 and the corresponding pitch of the second saw tooth treaded face 22 are such that in axial direction the floating inner rib 14 is self-locked supported by the inner ring 7.

Between the first saw tooth treaded face 21 and the second saw tooth treaded face 22 a plurality of cavities 23 is formed, in particular when the first saw tooth treaded face 21 and the second saw tooth treaded face 22 are not in full engagement. The inner ring 7 comprises a hydraulic fluid inlet 26, by means of which hydraulic fluid can be delivered between the first saw tooth treaded face 21 and the second saw tooth treaded face 22. The upper sliding face 18 and the lower sliding face 19 are sealed against the floating inner rib 14 by the provision of an O-ring 27, respectively. When temporarily pressurizing the cavities 23 and consequently the space between the first saw tooth treaded face 21 and the second saw tooth treaded face 22 with the hydraulic fluid by means of the hydraulic fluid inlet 24, the first saw tooth treaded face 21 and the second saw tooth treaded face 22 are separated and the self-locking effect is overcome.

Moreover, the bearing system comprises a hydraulic plunger 26 circumferentially attacking the floating inner rib 14 and the inner ring 7 in order to circumferentially drive the floating inner rib 14. Thereby the floating inner rib 14 is axially moved by the cooperation of the first saw tooth treaded face 21 and the second saw tooth treaded face 22 to a predetermined position so as to abut on each large roller end 11. Hence, a corresponding preload on each tapered roller 9 is applied, wherein the floating inner rib 14 is rigidly coupled to the inner ring 7.

## Claims

1. Bearing system for a wind turbine rotor, comprising a double row tapered roller bearing (5) in O-arrangement, wherein the double row tapered roller bearing (5) comprises an inner ring (7), a circumferential row of tapered rollers (9) supported on the inner ring (7), and a floating inner rib (14), a driving device (26) as well as an removable interlocking device (17 - 24), wherein the floating inner rib (14) can be axially moved by the driving device (26) to a predetermined position so as to abut on each large roller end (11) facing axially outwards in order to apply a corresponding preload on each tapered roller (9), and rigidly coupled to the inner ring (7) by means of the interlocking device (17 - 24).

2. Bearing system according to claim 1, wherein the interlocking device (17 - 24) forms a form-fit between the inner ring (7) and the floating inner rib (14).

3. Bearing system according to claim 2, wherein the interlocking device comprises a circumferential support rip (17) which is formed on the inner ring (7), extends in radial direction therefrom, and engages the floating inner rib (14) so as to form the form-fit between the inner ring (7) and the floating inner rib (14).

4. Bearing system according to claim 3, wherein the circumferential support rib (17) comprises a circumferential axial support step (20) arranged perpendicular to the bearing axis (3) and facing the bearing (5), wherein the floating inner rib (14) is axially supported by the support step (20).

5. Bearing system according to claim 4, wherein the inner ring (7) comprises a sliding face (18, 19) radially supporting the floating inner rib (14) on the inner ring (7) and axially guiding the floating inner rib (14) for the axial movement.

6. Bearing system according to claim 4 or 5, wherein the sliding face (18, 19) is adapted to circumferentially guide the floating inner rib (14), so that the floating inner rib (14) is circumferential movable on the inner ring (7).

7. Bearing system according to claim 6, wherein the axial support step (20) has a first saw tooth treaded face (21) and the floating inner rib (14) has a second saw tooth treaded face (22), wherein the first saw tooth treaded face (21) and the second saw tooth treaded face (22) are engaging one another and cooperating together, so that subject to the circumferential position of the floating inner rib (14) relative to the inner ring (7) the axial position of the floating inner rib (14) relative to the inner ring (7) is defined.

8. Bearing system according to claim 7, wherein the first saw tooth treaded face (21) and the second saw tooth treaded face (22) are formed in such a manner that in axial direction the floating inner rib (14) is self-locked supported by the inner ring (7).

9. Bearing system according to claim 8, wherein the inner ring (7) and/or the floating inner rib (14) is adapted to temporarily pressurize the space between the first saw tooth treaded face (21) and the second saw tooth treaded face (22) with hydraulic fluid in order to overcome the self-locking effect.

10. Bearing system according to any of claims 7 to 9, wherein the driving device (26) is adapted to circumferentially drive the floating inner rib (14) and thereby axially move the floating inner rib (14) by the cooperation of the first saw tooth treaded face (21) and the second saw tooth treaded face (22).
